# EUROPÄISCHE PATENTANMELDUNG

(11) **EP 4 357 633 A1**
(43) Veröffentlichungstag der Anmeldung: **24.04.2024**
(21) Anmeldenummer: 22202593.4
(22) Anmeldetag: 19.10.2022
(51) Int. Cl.: F16D 7/02, F16D 13/30, F16D 23/12, F16D 65/18, F16D 67/02, F41A 27/22, F41H 7/02

(54) **DREHMECHANISMUS MIT BREMSFUNKTION**

(71) Anmelder: PLANKO-BIO-NET GmbH & Co. KG, 89368 Winterbach (DE)
(72) Erfinder: OBERSCHMID Karl, 89368 Winterbach (DE)
(74) Vertreter: Stolmár & Partner Patentanwälte PartG mbB

(57) **Zusammenfassung**

Offenbart ist ein Drehmechanismus (100) mit Bremsfunktion, umfassend einen Antrieb, insbesondere eine Handkurbel (120), zum Einleiten eines Drehmoments in den Drehmechanismus (100), ein Abtriebselement (140) zum Ausleiten des Drehmoments aus dem Drehmechanismus (100), und eine Übertragungseinrichtung mit mehreren Übertragungselementen, insbesondere einer Wellenanordnung, die das Drehmoment vom Antrieb zum Abtriebselement (140) übertragen, wobei die Übertragungseinrichtung (200) ferner eine Bremsmechanik aufweist, die in einer Bremsposition die Übertragungseinrichtung fixiert und die in einer Freilaufposition die Übertragungseinrichtung freigibt.

## Beschreibung

### Gebiet der Erfindung

Die Erfindung betrifft einen Drehmechanismus mit Bremsfunktion, insbesondere für gepanzerte Fahrzeuge.

### Stand der Technik

Drehbare Funktionsaufbauten bzw. -gestelle für Fahrzeuge, insbesondere für gepanzerte Fahrzeuge gehören zum Stand der Technik. Auf dem Aufbau bzw. Gestell können je nach Einsatzzweck verschiedene Vorrichtungen für den militärischen Einsatz, bspw. Schusswaffen, wie Geschütze, Ortungstechnik, wie Radar und Kameras, aber auch Wasserwerfer für den polizeilichen oder Feuerwehr-Einsatz oder Drehleitern, Periskope, Förderschnecken, Förderbänder weitere Vorrichtungen für den zivilen Einsatz montiert werden. Die Bewegung der jeweils montierten Vorrichtung erfolgt entlang bzw. auf einer Schiene oder einem Zahnkranz die oder der in der Regel kreisförmig ausgebildet ist.

Damit die Vorrichtung nach der Ausrichtung auf der Schiene sicher verwendbar ist, können zusätzlich entsprechende Fixierelemente vorgesehen sein. Die Fixierung erfolgt dabei meist mit Hilfe von Stecklöchern, in die Bolzen zur Verrastung der Vorrichtung eingesteckt werden. Zur Fixierung der Vorrichtung muss diese exakt über dem jeweiligen Steckloch ausgerichtet werden. Dabei ergibt sich zum einen das Problem, dass die Ausrichtung mühsam und zeitaufwendig ist, da schon bei kleinsten Lageabweichungen ein Einführen des Bolzens in das jeweilige Steckloch verhindert wird. Zudem ergibt sich das Problem, dass die Vorrichtung nur an bestimmten, vorab festgelegten Positionen erfolgen kann. Des Weiteren kann es bei der Verwendung der Vorrichtung dazu kommen, dass diese eine derart hohe Belastung erfährt, dass die Vorrichtung und/oder die Fixierkomponenten beschädigt werden. Dies kann insbesondere dann geschehen, wenn das Fahrzeug bewegt wird und die Vorrichtung derart über dem Fahrzeugrand hervorsteht, dass bei der Fahrt andere Gegenstände gegen die Vorrichtung stoßen. Um dem entgegenzuwirken werden die bewegbare Funktionsaufbauten bzw. -gestelle entsprechend robuster ausgebildet, wodurch aber auch deren Gewicht steigt.

### Darstellung der Erfindung

Aufgabe der vorliegenden Erfindung ist es daher, eine flexibel und einfach fixierbare sowie robuste Vorrichtung bereitzustellen, mit deren Hilfe Funktionsaufbauten bzw. -gestelle auf Fahrzeugen auf einfache und schnelle Weise gedreht und präzise festgesetzt werden können.

Die Aufgabe wird gelöst durch einen Drehmechanismus mit Bremsfunktion gemäß Patentanspruch 1. Weitere die Erfindung ausgestaltende Merkmale sind in den abhängigen Patentansprüchen enthalten.

Ein erfindungsgemäßer Drehmechanismus mit Bremsfunktion umfasst einen Antrieb, insbesondere eine Handkurbel, zum Einleiten eines Drehmoments in den Drehmechanismus, ein Abtriebselement zum Ausleiten des Drehmoments aus dem Drehmechanismus, und eine Übertragungseinrichtung mit mehreren Übertragungselementen, insbesondere einer Wellenanordnung, die das Drehmoment vom Antrieb zum Abtriebselement übertragen, wobei die Übertragungseinrichtung ferner eine Bremsmechanik aufweist, die in einer Bremsposition die Übertragungseinrichtung fixiert und die in einer Freilaufposition die Übertragungseinrichtung freigibt. Derart wird ein flexibler sowie einfach und präzise fixierbarer Drehmechanismus bereitgestellt.

Der Drehmechanismus ist insbesondere dafür ausgebildet, an einer Schiene, insbesondere an einem teilkreis- oder kreisförmigen Zahnkranzplatziert zu werden. Das Abtriebselement ist insbesondere dazu ausgebildet, das auf dieses übertragene Drehmoment derart in Bewegungsenergie umzusetzen, dass der Drehmechanismus auf dem Zahnkranz um dessen Mittelpunkt gedreht wird.

Als Bremsposition wird eine Stellung der Bremsmechanik verstanden, bei der die Übertragungseinrichtung derart fixiert ist, dass vom Antrieb kein Drehmoment zum Abtriebselement übertragbar ist bzw. die Übertragung gehemmt oder blockiert wird. Sofern der Drehmechanismus auf einer Schiene angebracht ist, kann so verhindert werden, dass der Drehmechanismus ungewollt entlang bzw. auf der Schiene bewegt wird. Der Drehmechanismus ist dabei derart ausgebildet, dass die Bremsmechanik unabhängig von der Schienenposition in die Bremsposition versetzbar ist. Dementsprechend kann je nach Bedarf flexibel und präzise jede gewünschte Schienenposition eingestellt werden. Vorzugsweise weist die Übertragungseinrichtung eine Eingangswelle und eine Ausgangswelle auf und die Bremsmechanik zum Fixieren der Übertragungseinrichtung übt mit einer Bremsfläche eine Druckkraft gegen die Eingangswelle und/oder die Ausgangswelle aus. Eingangs- und Ausgangswelle sind dabei jeweils insbesondere ein spezifisch ausgebildetes Übertragungselement. Derart kann es ermöglicht werden, dass die Bremsmechanik die Übertragungseinrichtung mittels Reibkraft fixiert, wodurch gleichzeitig eine einfache und flexible sowie sichere Brems- bzw. Fixierwirkung erreicht werden kann.

Vorzugsweise ist die Bremsmechanik durch eine Federeinrichtung vorgespannt, so dass die Druckkraft erzeugt wird. Derart kann erreicht werden, dass die Bremsmechanik selbsttätig in die Bremsposition versetzt wird, wodurch die Sicherheit des Drehmechanismus erhöht werden kann.

Vorzugsweise weist die Übertragungseinrichtung bei der die Übertragungseinrichtung (200)zumindest zwei miteinander koaxial und mit einer Axialseite gegenüberliegend angeordnete Übertragungselemente aufweist, wobei die Übertragungselemente an ihren zueinander gewandten Axialseiten (214, 232) über eine Hubmechanik (240) in Kontakt stehen. Insbesondere sind diese Übertragungselemente als Eingangswelle oder Ausgangswelle und als eine Verschiebungshülse ausgebildet. Derart kann mittels der Übertragungselemente bzw. mittels der Verschiebungshülse und der Eingangs- oder Ausgangswelle die auf die Bremsfläche wirkende Druckkraft durch Verschiebung der Übertragungselemente bzw. der Verschiebungshülse weg von der Eingangs- oder Ausgangswelle die Bremsfläche freigegeben werden, d.h. die Bremswirkung aufgehoben werden. So kann die Handhabbarkeit und die Sicherheit des Drehmechanismus erhöht werden.

Die Verschiebungshülse ist vorzugsweise zumindest abschnittsweise als Bestandteil der Bremsmechanik ausgebildet, d.h. ein Teil der Verschiebungshülse ist als Bremsabschnitt ausgebildet. Dadurch werden die Einzelteile der Vorrichtung reduziert.

Die zueinander gewandten bzw. einander zugewandten Axialseiten von Übertragungselementen wie der Eingangswelle und der Verschiebungshülse können die Hubmechanik ausbilden.

Vorzugsweise umfasst die Hubmechanik zumindest eine in zwei entgegengesetzte Richtungen ansteigende Laufbahn auf einer Axialseite eines Übertragungselements, insbesondere der Verschiebungshülse und/oder der Eingangswelle und die zueinander gewandten Axialseiten stehen über zumindest eine Kugel in Kontakt, die in der Laufbahn geführt ist. Vorzugsweise umfasst die Hubmechanik auch mehrere Kugeln und Laufbahnen.

Als ansteigende Laufbahn wird eine Geometrie bzw. Vertiefung oder Nut der Laufbahn verstanden, die kontinuierlich von einem tiefen Bereich zu einem hohen Bereich reicht. Befindet sich die Kugel im tiefen Bereich, sind die einander zugewandten Axialseiten der Eingangswelle und der Verschiebungshülse geringstmöglich zueinander beabstandet. Befindet sich die Kugel im hohen Bereich, sind die einander zugewandten Axialseiten der Eingangswelle und der Verschiebungshülse weitest möglich zueinander beabstandet. Die Hubmechanik ist derart ausgebildet, dass die Kugel in der Laufbahn vom tiefen Bereich in den hohen Bereich führbar ist, so dass die Axialseiten der Eingangswelle und der Verschiebungshülse weiter voneinander beabstandet werden. Als ansteigende Laufbahn wird ferner jede Geometrie der Laufbahn verstanden, die in Kombination mit einer Kugel dazu ausgebildet ist, die Verschiebungshülse von der Eingangswelle zu entfernen, indem beide Komponenten gegeneinander verdreht werden. Je nach Anordnung der Hubmechanik in dem Drehmechanismus kann die Laufbahn noch oben hin, nach unten hin oder auch zur Seite hin ansteigend, d.h. sich erhöhend ausgebildet sein. Wird die Kugel in der Laufbahn den Anstieg hinauf geführt, entfernen sich die einander zugewandten Axialseiten der Axialwelle und der Verschiebungshülse voneinander.

Entweder eine der zueinander gewandten Axialseiten weist eine ansteigende Laufbahn auf, während die andere Axialseite eine eben bzw. flach ausgebildete Laufbahn aufweist oder beide zueinander gewandten Axialseiten weisen jeweils eine ansteigende Laufbahn auf, wodurch der resultierende Hub erhöht werden kann bzw. bei gleichbleibendem Hub der Anstieg der Laufbahn reduziert werden kann.

Das Drehmoment wird dann bevorzugt dadurch übertragen, dass der Axialhub mit einem Anschlag begrenzt ist, es sozusagen einen Axialstopp gibt. Dadurch, dass sich die Übertragungselemente, hier bspw. die Verschiebungshülse und die Eingangswelle, axial nicht mehr weiter voneinander entfernen können, kann die Kugel in der Laufbahn nicht mehr weiter abrollen und überträgt das Drehmoment von dem ersten auf das zweite Übertragungselement.

Vorzugsweise ist eine der beiden Laufbahnen derart ausgebildet, dass im erforderlichen Bewegungsumfang die Kugel mitgeschleppt wird, d.h. die Eingangswelle und die Verschiebungshülse sollen nicht gegeneinander verdrehbar sein, ohne dass deren Entfernung zueinander variiert wird. Zu diesem Zweck können in zumindest einer Laufbahn entsprechende Kugelmitnahmemittel bzw. -stoppmittel vorgesehen sein.

Die Verschiebungshülse und die Eingangswelle können voneinander entfernt werden, indem diese gegeneinander verdreht werden. Wird mittels des Antriebs Drehmoment auf die Eingangswelle übertragen, kann so in einem ersten Bewegungsabschnitt die Bremsfläche freigegeben werden - indem die Verschiebungshülse und die Eingangswelle durch gegenseitiges Verdrehen voneinander beabstandet werden - und anschließend durch Fortführen der initialen Bewegung Drehmoment über die Übertragungseinrichtung von der Eingangswelle zum Abtriebselement übertragen werden - indem die Verschiebungshülse mit der Eingangswelle mitgedreht wird. Dabei muss der Bediener keine von der Drehmomentübertragungsbewegung separate Bewegung zur Freigabe der Bremsfläche ausführen, sondern ist beides mittels einer gleichbleibenden Bewegung hintereinander ausführbar. Derart kann die Handhabbarkeit des Drehmechanismus verbessert und vereinfacht werden.

Indem die Laufbahn in zwei entgegengesetzte Richtungen ansteigend ausgebildet ist, können die Axialseiten der Verschiebungshülse und der Eingangswelle unabhängig von der Drehrichtung voneinander entfernt werden, d.h. sowohl mit als auch entgegen des Uhrzeigersinns.

Vorzugsweise sind auf der Axialseite mehrere, insbesondere drei der in zwei Richtungen ansteigenden Laufbahnen vorgesehen und ist in jeder eine Kugel angeordnet, die in der Laufbahn abrollt. Derart kann eine gleichmäßigere Lastverteilung erreicht werden, wodurch die Standzeit des Drehmechanismus, insbesondere der Hubmechanik, erhöht werden kann.

Als einzelne Laufbahn wird dabei jeder Abschnitt der auf der/den Axialseite/n vorgesehenen Vertiefung/en bzw. Nut/en verstanden, der von einer tiefsten Lage (entsprechend der Bremsposition) zu einer höchsten Lage (entsprechend der Freilaufposition) reicht. Es können mehrere Laufbahnen unmittelbar hintereinander und ineinander übergehend angeordnet sein, d.h. mit gleichem radialem Abstand zur Drehachse der Verschiebungshülse bzw. der Eingangswelle. Bei größeren Durchmessern oder auch wenn nur geringer Hub erreicht werden soll und hierfür nur wenig Weg benötigt wird können die Laufbahnen auch nur auf einem Teil des Umfangs ausgebildet sein, so dass die Steigung einer Laufbahn sich nicht über 60° des Umfangs erstreckt. Alternativ können die Laufbahnen jeweils umfänglich mit unterschiedlichen Radien Radius der Verschiebungshülse bzw. der Eingangswelle reichen und bspw. konzentrisch angeordnet sein. Dies kann bspw. bei einer längeren Steigungsstrecke benötigt werden, wenn mehr Kräfte überwunden werden müssen. Ferner kann der Drehmechanismus bei einer Drehbewegung auch unterschiedliche Kräfte zu unterschiedlichen Zeitpunkten zu überwinden haben. Zu diesem Zweck kann man in jeder Laufbahn den Kugelradius und die Steigung genau nach Kraftanforderung und Weg festlegen.

Vorzugsweise sind die Laufbahnen derart ausgebildet, dass deren Verlauf gleichartig und insbesondere auch stetig, weiter vorzugsweise auch mit gleicher Steigung ist, insbesondere entlang beider Anstiegsrichtungen, und diese entlang des Umfangs der Verschiebungshülse bzw. der Eingangswelle gleichartig bzw. in gleichen Abständen regelmäßig verteilt sind. Derart kann eine nochmals gleichmäßigere Lastverteilung erreicht werden, wodurch die Lebensdauer des Drehmechanismus, insbesondere der Hubmechanik, nochmals erhöht werden kann.

Bei drei Laufbahnen können beispielsweise die jeweiligen höchsten Lagen der Laufbahnen jeweils um 120° zueinander versetzt sein in Bezug auf die Drehachse der Elemente, auf denen die Laufbahnen ausgebildet sind.

Vorzugsweise umfasst der Drehmechanismus ferner eine Drehrichtungsumkehreinrichtung, insbesondere zumindest ein oder zwei Zwischenritzel, das oder die im Prinzip an einer beliebigen Stelle in dem Drehmechanismus angeordnet sein können. In einer Ausführungsform der Drehrichtungsumkehreinrichtung sind ein oder zwei Zwischenritzel am Abtriebselement ausgebildet. Mehrere Zwischenritzel können das Drehmoment parallel übertragen, so dass die einzelnen Zwischenritzel kleiner ausgebildet sein können. Derart kann es ermöglicht werden, dass bei Betätigung des Antriebs in eine Drehrichtung, bspw. durch Kurbeln in Richtung des Uhrzeigersinns, der Drehmechanismus in dieselbe Drehrichtung versetzt wird, bspw. ebenfalls in den Uhrzeigersinn. Dadurch kann die Handhabbarkeit des Drehmechanismus verbessert werden.

Durch eine entsprechende Auswahl des Zwischenritzels oder sogar mehrerer hintereinander geschalteter Zwischenritzel kann zudem ein gewünschtes Übersetzungsverhältnis eingestellt werden, bspw. eine Untersetzung bzw. eine Übersetzung ins Langsame, insbesondere, wenn an dem Drehmechanismus schwere Funktionsaufbauten montiert sind bzw. eine Übersetzung ins Schnelle, insbesondere, wenn an dem Drehmechanismus leichte Funktionsaufbauten montiert sind, die schnell ausgerichtet werden sollen.

Vorzugsweise umfasst der Drehmechanismus ferner einen Freilaufmechanismus, der einen Hebel zur Verschiebung, insbesondere zur axialen Verschiebung, von zumindest einem Übertragungselement aufweist, so dass die Drehmomentübertragung des Drehmechanismus unterbrochen ist. Derart wird es ermöglicht, dass der Drehmechanismus bei Bedarf zügig in eine gewünschte Position versetzt, insbesondere gewuchtet, werden kann. Dadurch kann die Flexibilität des Drehmechanismus erhöht werden.

Vorzugsweise weist der Freilaufmechanismus eine Axialwelle auf, die axial verschiebbar ist, so dass die Übertragung des Drehmoments vom Antrieb zum Abtriebselement in der Übertragungseinrichtung unterbrochen ist. Derart wird es ermöglicht, dass die Drehmomentübertragung sicher unterbrochen und wieder aufgenommen werden kann.

Die Axialwelle ist dabei insbesondere ein Übertragungselement der Übertragungseinrichtung. Derart kann die Anzahl an benötigten Bauteilen des Drehmechanismus reduziert werden, wodurch ebenfalls die Herstellkosten reduziert werden können.

Vorzugsweise bewirkt der Hebel eine Axialverschiebung, wobei der Hebel als Drehhebel ausgebildet ist, wobei der Hebel einen Gewindeabschnitt aufweist, der am unteren Ende mit dem zu verschiebenden Übertragungselement in Kontakt steht. Derart wird es auf einfache und robuste Art und Weise ermöglicht, das entsprechende Übertragungselement axial zu verschieben, wodurch insgesamt die Handhabbarkeit und Lebensdauer des Drehmechanismus erhöht werden kann.

Vorzugsweise ist das zu verschiebende Übertragungselement entgegen der Verschiebungsrichtung mittels einer Spanneinrichtung vorgespannt, insbesondere mittels Federn. Derart kann erreicht werden, dass der Freilaufmechanismus selbsttätig in die Konfiguration zurückversetzt werden kann, in der die Drehmomentübertragung stattfindet. Derart können die Sicherheit des Drehmechanismus erhöht und dessen Handhabbarkeit verbessert werden.

Die Federn können bspw. als Tellerfedern ausgebildet sein.

Vorzugsweise umfasst der Drehmechanismus ferner einen Überlastmechanismus, der zumindest eine Axialwelle und ein Übertragungselement aufweist, wobei die Axialwelle und das Übertragungselement mit einer reibschlüssigen, insbesondere kegelförmigen Kontaktfläche ausgebildet sind. Derart wird es ermöglicht, dass der Drehmechanismus bei übermäßiger Belastung dieser Belastung ausweichen und in eine Stellung versetzt werden kann, in der diese Belastung nicht (mehr) wirkt. Derart kann verhindert werden, dass die Komponenten des Drehmechanismus durch die übermäßige Belastung beschädigt werden, wodurch die Standzeit des Drehmechanismus erhöht werden kann.

Vorzugsweise sind der Freilaufmechanismus und der Überlastmechanismus derart ausgebildet, dass bei Überlastung solange ein Freilauf wirkt, bis die Überlastung nicht mehr auf den Drehmechanismus wirkt. Dazu können Komponenten des Freilaufmechanismus auch als Komponenten des Überlastmechanismus fungieren. Dies trifft insbesondere auf die Spanneinrichtung zu, deren Spannwirkung - die letztlich eine Übertragung des Drehmoments mittels der Übertragungseinrichtung ermöglicht - zum einen mittels des Freilaufmechanismus und zum anderen mittels des Überlastmechanismus außer Kraft gesetzt werden kann.

Vorzugsweise weist der Überlastmechanismus ferner ein Spannelement auf, das fest mit dem Abtriebselement verbunden ist und eine zur Kontaktfläche des Übertragungselementes komplementäre Kontaktfläche aufweist, insbesondere eine kegelförmige Kontaktfläche.

Derart wird es ermöglicht, dass die zum Auslösen des Überlastmechanismus erforderliche Belastung durch Anpassen der beiden Kontaktflächen eingestellt werden kann. Das Einstellen kann dabei durch entsprechende Auswahl der Größe der Kontaktflächen und auch durch Auswahl bzw. Einstellen des entsprechenden Reibungskoeffizienten geschehen. Derart kann die erforderliche Belastung auf einfache und präzise Art eingestellt werden.

Vorzugsweise ist das Spannelement die Ausgangswelle bzw. ist Bestandteil der Ausgangswelle. Derart kann die Anzahl an notwendigen Komponenten des Drehmechanismus reduziert werden, wodurch dessen Herstellkosten reduziert werden können.

Vorzugsweise sind die Kontaktflächen ferner derart ausgebildet, dass diese nach der Überlastung in jeder beliebigen Stellung bzw. Verdrehung zueinander wieder derart aufeinander gebracht werden können, dass mittels der Übertragungseinrichtung Drehmoment übertragbar ist. Dies kann bspw. dadurch erreicht werden, dass die Kontaktflächen kegel- oder kugelförmig ausgebildet sind.

Vorzugsweise bildet die Axialwelle mit der reibschlüssigen Kontaktfläche des Überlastmechanismus auch das axial verschiebbare Übertragungselement des Freilaufmechanismus aus. Derart kann die Anzahl an notwendigen Komponenten des Drehmechanismus reduziert werden, wodurch dessen Herstellkosten reduziert werden können.

Insbesondere umfasst die Übertragungseinrichtung alle drehmomentübertragenden Elemente, d.h. bspw. sofern vorhanden auch alle Komponenten des Überlastmechanismus und des Freilaufmechanismus.

Ein weiterer Aspekt der Erfindung ist ein Drehmechanismus, bei dem ein Freilauf und/oder ein Überlastmechanismus vorgesehen sind, aber bei dem nicht zwingend ein Bremsmechanismus vorhanden sein muss.

Drehmechanismus, umfassend einen Antrieb, insbesondere eine Handkurbel, zum Einleiten eines Drehmoments in den Drehmechanismus; ein Abtriebselement zum Ausleiten des Drehmoments aus dem Drehmechanismus; und eine Übertragungseinrichtung mit mehreren Übertragungselementen, insbesondere einer Wellenanordnung, die das Drehmoment vom Antrieb zum Abtriebselement übertragen, wobei der Drehmechanismus einen Freilaufmechanismus umfasst, der einen Hebel zur Verschiebung, insbesondere zur axialen Verschiebung, von zumindest einem Übertragungselement mit einer reibschlüssigen und kegelförmigen Kontaktfläche aufweist, so dass die Drehmomentübertragung des Drehmechanismus an der Kontaktfläche unterbrochen ist.

Drehmechanismus, umfassend einen Antrieb, insbesondere eine Handkurbel, zum Einleiten eines Drehmoments in den Drehmechanismus; ein Abtriebselement zum Ausleiten des Drehmoments aus dem Drehmechanismus; und eine Übertragungseinrichtung mit mehreren Übertragungselementen, insbesondere einer Wellenanordnung, die das Drehmoment vom Antrieb zum Abtriebselement übertragen, wobei der Drehmechanismus einen Überlastmechanismus umfasst, der zumindest eine Axialwelle und ein Übertragungselement aufweist, wobei die Axialwelle und das Übertragungselement mit einer reibschlüssigen, insbesondere kegelförmigen Kontaktfläche ausgebildet sind. Die reibschlüssige Kontaktfläche steht mit einer weiteren Kontaktfläche eines anderen Übertragungselements in Kontakt, so dass bei einer Überlast die Haftreibung der Kontaktflächen überschritten wird und die Kontaktflächen sich relativ zueinander bewegen. So kann eine Beschädigung der anderen Teile des Drehmechanismus oder auch Teile der vom Drehmechanismus zu drehenden Aufbauten vermieden werden.

### Kurze Beschreibung der Zeichnungen

Fig. 1a zeigt einen Drehmechanismus mit einem Freilaufmechanismus und einer Adaptervorrichtung in einer isometrischen Ansicht.
Fig. 1b zeigt den in Fig. 1a dargestellten Drehmechanismus in einer weiteren isometrischen Ansicht.
Fig. 2a zeigt den in den Fig. 1a und 1b dargestellten Drehmechanismus in einer Schnittansicht.
Fig. 2b zeigt eine Übertragungseinrichtung des in Fig. 2a dargestellten Drehmechanismus in einer Schnittansicht.
Fig. 3 zeigt einen Teil des Drehmechanismus mit Verschiebungshülse und Federeinrichtung in einer Explosionsansicht.
Fig. 4 zeigt eine Drehrichtungsumkehreinrichtung des in den Fig. 1a bis 2a dargestellten Drehmechanismus in einer Explosionsansicht.
Fig. 5 zeigt einen Überlastmechanismus des in den Fig. 1a bis 2a dargestellten Drehmechanismus in einer Explosionsansicht.
Fig. 6 zeigt eine Hubmechanik mit Eingangswelle und Verschiebungshülse des in den Fig. 1a bis 2a dargestellten Drehmechanismus in einer Explosionsansicht.
Fig. 7a zeigt ein Endstück der in Fig. 6 dargestellten Eingangswelle in einer isometrischen Ansicht.
Fig. 7b zeigt das in Fig. 7a dargestellte Endstück in einer Draufsicht.
Fig. 7c zeigt das in den Fig. 7a und 7b dargestellte Endstück in einer Schnittansicht.
Fig. 7d zeigt das in den Fig. 7a bis 7c dargestellte Endstück in einer Seitenansicht.
Fig. 7e zeigt das das in den Fig. 7a bis 7d dargestellte Endstück in einer weiteren Seitenansicht.
Fig. 8a zeigt ein alternatives Endstück in einer Seitenansicht.
Fig. 8b zeigt das in Fig. 8a dargestellte alternative Endstück in einer weiteren Seitenansicht.
Fig. 9 zeigt den in Fig. 1 dargestellten Freilaufmechanismus mit einem Übertragungselement in einer Explosionsansicht.
Fig. 10 zeigt einen Teil des in Fig. 5 dargestellten Überlastmechanismus in Kombination mit einem Abtriebselement in einer Explosionsansicht.
Fig. 11a zeigt eine Bremsmechanik mit einer Verschiebungshülse in einer Explosionsansicht.
Fig. 11b zeigt die in Fig. 11a dargestellte Bremsmechanik in einer Bremsposition mit einer Federeinrichtung in einer Schnittansicht.
Fig. 11c zeigt die in den Fig. 11a und 11b dargestellte Bremsmechanik in einer Freilaufposition in einer Schnittansicht.

### Beschreibung der bevorzugten Ausführungsformen

Die im Folgenden verwendeten Lagebeziehungs-Begriffe - bspw. "oben", "unten", "zwischen", "tief" und "hoch" - beziehen sich vorrangig auf die jeweils diskutierte Figur bzw. auf die konkrete Lagebeziehung der jeweils diskutierten Komponenten zueinander. Die Lagebeziehungs-Begriffe sind jedoch nicht als einschränkend bzw. zwingend zu verstehen. So kann beispielsweise eine im Folgenden als in Bezug auf eine erste Komponente oben liegend bezeichnete zweite Komponente ggf. bei Aufrechterhaltung der jeweiligen Funktionalität auch in alternativen Ausführungsformen als unten liegend bzw. sich seitlich daneben befindend bezeichnet werden. Ferner sind alle drehmomentübertragenden Bauteile "Übertragungselemente" im Sinne der Erfindung.

Im Folgenden werden Befestigungsmittel 112 dargestellt. Diese sind in den entsprechenden Fig. jeweils als Schraube ausgebildet dargestellt. Es sind aber auch andere Befestigungsmittel 112 möglich, bspw. Nieten o.ä. Der im Folgenden beschriebene Drehmechanismus weist eine Bremsmechanik 220, einen Freilaufmechanismus 300 und einen Überlastmechanismus 350. Diese drei Mechanismen sind aber jeweils unabhängig voneinander in einen Drehmechanismus einbaubar. D.h. sie können in jeder beliebigen Kombination in einem Drehmechanismus verbaut werden (nur Bremsmechanismus, nur Freilaufmechanismus Brems- und Überlastmechanismus, usw.).

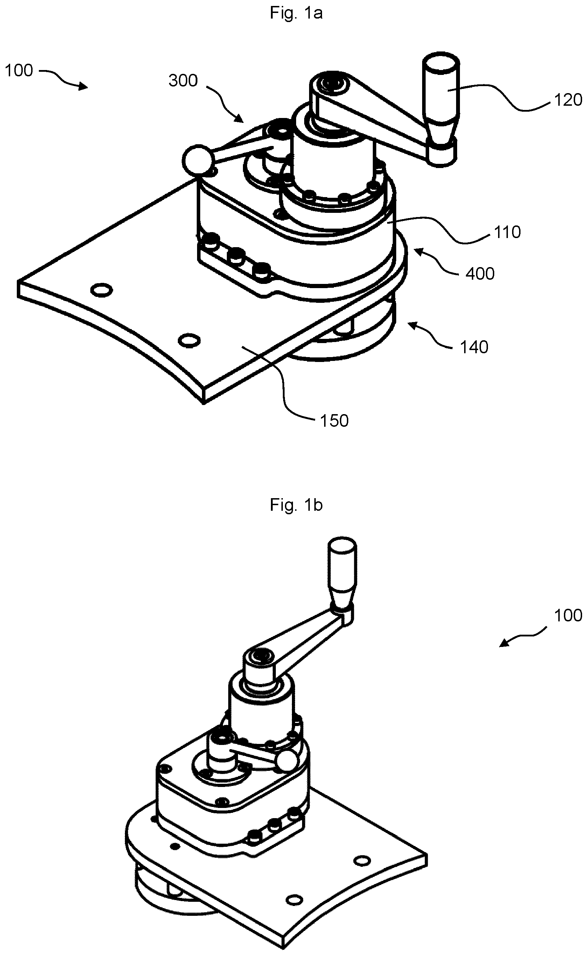

Fig. 1a zeigt einen Drehmechanismus 100 mit einem Freilaufmechanismus 300 und einer Adaptervorrichtung 150 in einer isometrischen Ansicht. Die Adaptervorrichtung 150 ist dazu ausgebildet, auf Schienen oder Zahnkränze von verschiedenen Vorrichtungen für den militärischen bzw. zivilen Einsatz montiert zu werden. Der Drehmechanismus 100 weist ein Gehäuse 110 auf, in dem die im Folgenden beschriebenen Komponenten des Drehmechanismus 100 eingehaust sind. Der Drehmechanismus 100 weist eine Handkurbel 120 auf, die zum Einleiten eines Drehmoments in den Drehmechanismus 100 ausgebildet ist. Der Drehmechanismus 100 weist ferner eine Drehrichtungsumkehreinrichtung 400 auf, die in Fig. 1a vom Gehäuse 110 verdeckt ist. Der Drehmechanismus 100 weist ferner ein Abtriebselement 140 zum Ausleiten des Drehmoments aus dem Drehmechanismus 100 auf.

Fig. 1b zeigt den in Fig. 1a dargestellten Drehmechanismus 100 in einer weiteren isometrischen Ansicht.

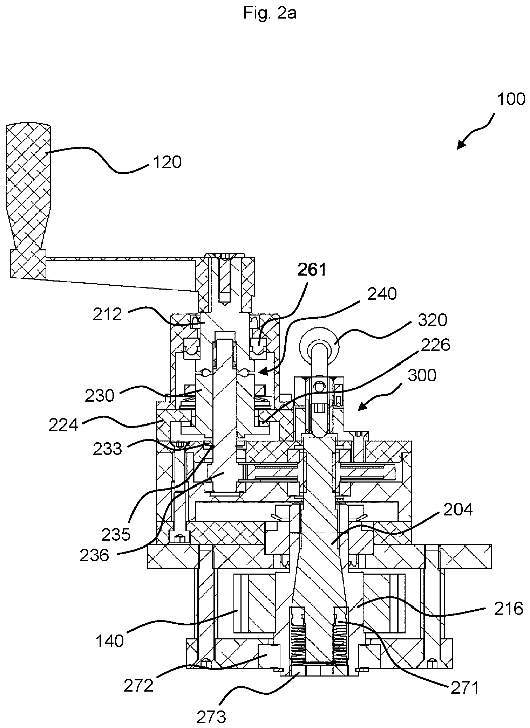

Fig. 2a zeigt den in den Fig. 1a und 1b dargestellten Drehmechanismus 100 in einer Schnittansicht.. Der Drehmechanismus 100 weist eine Eingangswelle 212 auf, die mit der Handkurbel 120 derart verbunden ist, dass durch Drehen bzw. Betätigen der Handkurbel 120 die Eingangswelle 212 rotiert wird. Der Drehmechanismus 100 weist ferner eine Verschiebungshülse 230 auf, die unterhalb der Eingangswelle 212 angeordnet ist. Die Verschiebungshülse 230 sitzt auf einer Ausgangswelle 203, die einen Anschlag 235 aufweist, der hier insbesondere als Ring ausgebildet ist, der in einer entsprechenden Nut auf der Ausgangswelle 203 sitzt. Der Anschlag kann aber auch als Stufe in der Ausgangswelle 203 selbst ausgebildet sein. An dem Anschlagring ist ein Einstellring 233 angelegt, an den die Verschiebungshülse 230 anschlagen kann. Durch das vorsehen von unterschiedlich dicken oder auch mehreren Einstellringen 233 kann dann der mögliche Hub der Verschiebungshülse 230 festgelegt werden. Die Ausgangswelle 203 ist in der vorliegend gezeigten Ausführungsform mit einem Radiallager 218 (hier ein Nadellager) in der Eingangswelle 212 gelagert.

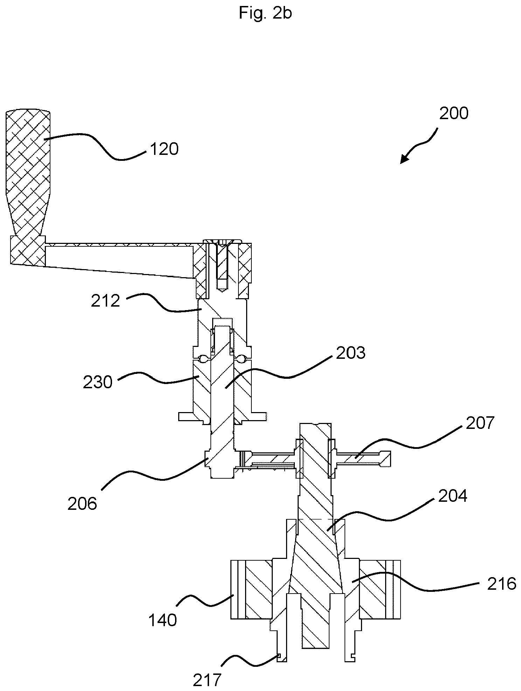

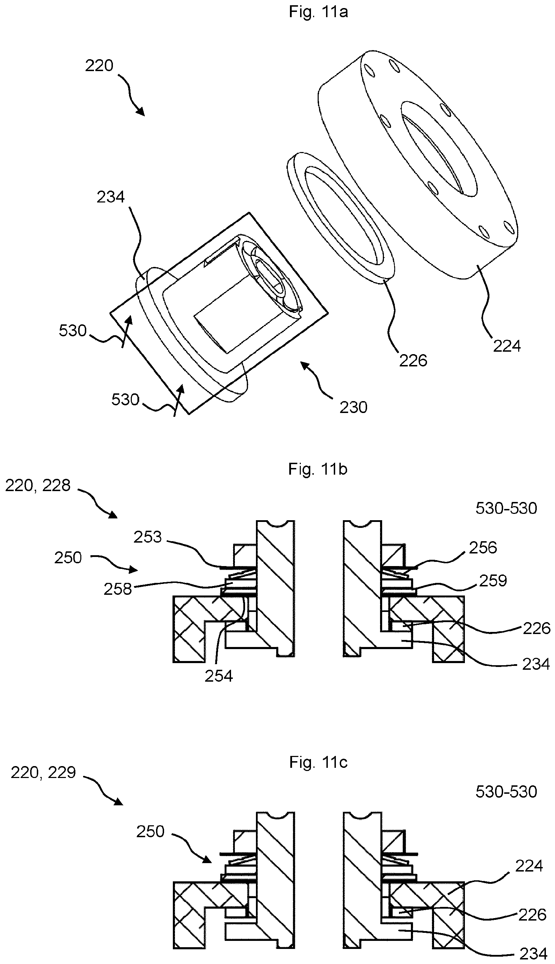

Zwischen der Eingangswelle 212 und der Verschiebungshülse 230 bzw. die einander zugewandten Seiten der Eingangswelle 212 und der Verschiebungshülse 230 umfassend weist der Drehmechanismus 100 eine Hubmechanik 240 auf. Die Hubmechanik ist in der gezeigten Ausführungsform an den Stirnflächen der Übertragungselemente Eingangswelle 212 und Verschiebungshülse 230 vorgesehen, kann aber bspw. auch an der Stirnflächen der Verschiebungshülse 230 und der Ausgangswelle 203 ausgebildet sein. In diesem Fall ist die Verschiebungshülse 230 dann um die Eingangswelle 212 herum angeordnet. Der Drehmechanismus 100 weist ferner eine Bremsmechanik 220 auf, die an der Verschiebungshülse 230 angeordnet ist und die in einer Bremsposition (vgl. Fig. 11b) die Verschiebungshülse 230 und damit eine Übertragungseinrichtung (vgl. Fig. 2b) fixiert. Die Bremsmechanik 220 gibt in einer Freilaufposition (vgl. Fig. 11c) die Verschiebungshülse 230 und damit die Übertragungseinrichtung (vgl. Fig. 2b) frei. Die Hub und Bremsmechanik ist hier über ein Axiallager 261 am Gehäuse gelagert.

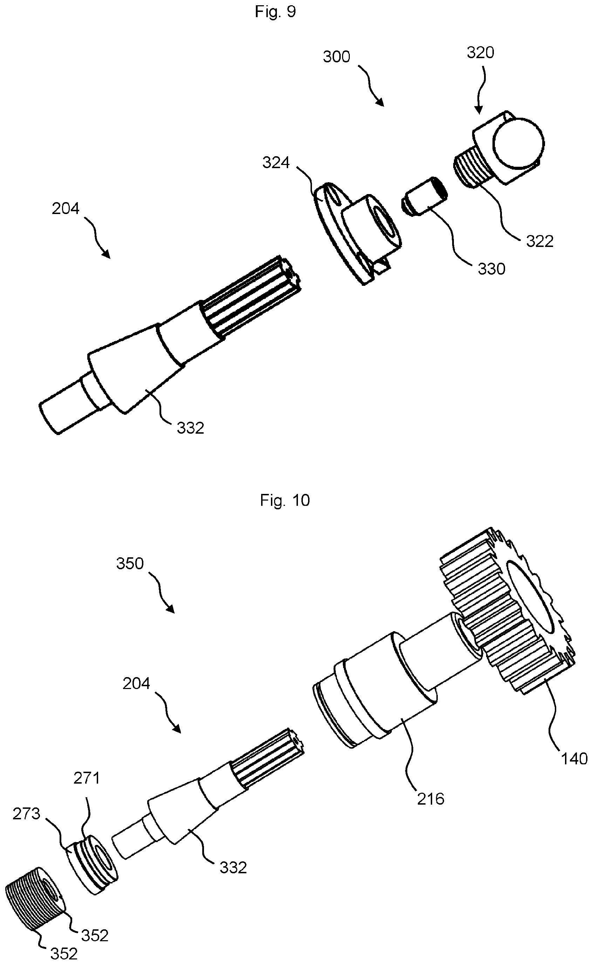

Der Freilaufmechanismus 300 weist ferner einen Hebel 320 auf. Der Drehmechanismus 100 weist ferner eine Ausgangswelle 216, die mit dem Abtriebselement 140 verbunden ist, und ein Übertragungselement 204 auf. Die Ausgangswelle 216 ist mit dem Übertragungselement 204 hier über eine reibschlüssige, kegelförmige Kontaktfläche (vgl. Fig. 10) verbunden, wenn ein Überlastmechanismus oder ein Freilaufmechanismus im Drehmechanismus vorgesehen sein soll.

Fig. 2b zeigt eine Übertragungseinrichtung 200 des in Fig. 2a dargestellten Drehmechanismus 100 in einer Schnittansicht. Im Vergleich zu Fig. 2a sind in Fig. 2b lediglich die Komponenten des Drehmechanismus 100 dargestellt, die Teil der Übertragungseinrichtung 200 sind. Die Übertragungseinrichtung 200 weist ferner das Übertragungselement Ausgangswelle 203 auf, das an dessen oberem Ende mit der Verschiebungshülse 230 verbunden ist und das an dessen unterem Ende ein Zwischenritzel 206 aufweist, das insbesondere einstückig mit der Ausgangswelle 203 ausgebildet ist. Die Übertragungseinrichtung 200 weist ferner ein weiteres Zwischenritzel 207 auf, das mit dem Zwischenritzel 206 der Ausgangswelle 203 verbunden sein kann, wodurch sich aber die Drehrichtung des Abtriebselements 140 umdrehen würde. In der vorliegenden Ausführungsform sind daher zwei Zwischenritzel 208, 209 vorgesehen, die die Ritzel 206 und 207 miteinander verbinden, so dass die Zwischenritzel 206 und 207 nicht direkt miteinander verbunden sind und die Drehrichtung der Handkurbel 120 und die Drehrichtung des zu drehenden Fahrzeugaufbaus auf dem Zahnkranz am Fahrzeug wieder übereinstimmen.

Das Zwischenritzel 207 kann also auf unterschiedliche Weise mit dem Übertragungselement 204 verbunden sein. Wird über die Handkurbel 120 Drehmoment in den Drehmechanismus 100 eingeleitet (vgl. Fig. 1a bis 2a), wird dieses Drehmoment über die Eingangswelle 212, die Verschiebungshülse 230, das Übertragungselement 203, das Zwischenritzel 206, das Zwischenritzel 207, das Übertragungselement 204 und die Ausgangswelle 216 letztlich auf das Abtriebselement 140 übertragen und kann mittels diesem aus dem Drehmechanismus 100 ausgeleitet werden.

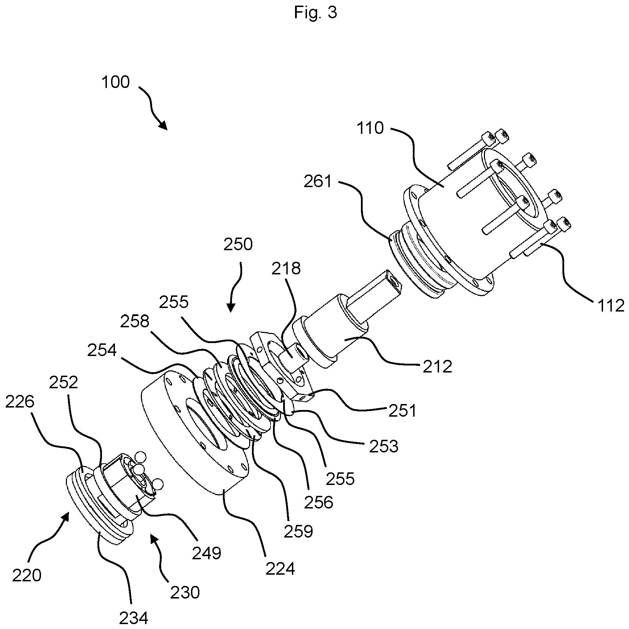

Fig. 3 zeigt einen Teil des Drehmechanismus 100 mit der Verschiebungshülse 230 und der Bremsmechanik 220 in einer Explosionsansicht. Die Bremsmechanik 220 umfasst dabei eine Federeinrichtung 250 und einen Teil der Verschiebungshülse 230. Ein Übertragungselement, hier die Verschiebungshülse 230, weist dafür einen Bremsabschnitt 234 und der Drehmechanismus 100 ein Bremsgehäuse 224 auf, zwischen denen mittels einer Bremsscheibe 226 eine Bremsreibung erzeugbar ist. Die Bremsscheibe 226 kann sowohl am Gehäuse als auch an dem Bremsabschnitt 234 der Verschiebungshülse befestigt sein. Um jedoch bei Verschleiß der Bremsscheibe 226 möglichst wenig Elemente austauschen zu müssen, ist es bevorzugt die Bremsscheibe 226 als getrenntes Element lose zwischen Bremsabschnitt 234 und Bremsgehäuse 224 anzuordnen. Eine Zentrierung der Bremsscheibe 226 kann dann mit Hilfe eines Zentrierrings 252, bspw. ein Bronzering, ausgeführt werden, Wird die Verschiebungshülse 230 von der Federeinrichtung 250 nach oben geschoben, wird gleichfalls der Bremsabschnitt 234 und damit die Bremsscheibe 226 gegen das Bremsgehäuse 224 gepresst, so dass eine Bremswirkung erreicht wird.

Die Federeinrichtung 250 weist ferner eine Einstellmutter 251 und, ein oberes Außenblech 253 und eine untere Laufscheibe 254, ein Federelement 256, eine obere Laufscheibe 258 und ein Axiallager 259, das hier als Nadellager ausgebildet ist, auf. Die Verschiebungshülse 230 weist im oberen Bereich ein Gewinde auf. Die Einstellmutter 251ist auf das Gewinde der Verschiebungshülse 230 aufschraubbar und hat zusätzlich Gewindebohrungen an jeder Fläche der Schlüsselweiten, um die gewünschte Einstellposition zu sichern. Unterhalb der Einstellmutter s 251 befindet sich das obere Außenblech 253, das die Einstellmutter davor schützt, beim Betätigen der Brems- und Hubmechanik versehentlich verdreht und damit gelöst zu werden. Unter dem oberen Außenblech 253 ist das zumindest eine Federelement 256 angeordnet (mehrere Federelemente sind zur Steigerung der Federkraft ebenfalls möglich), wobei das Federelement auf der oberen Laufscheibe 258 aufliegt. Zwischen der oberen und der unteren Laufscheibe 258, 254 ist das Axiallager 259 angeordnet. Die Laufscheiben 254, 258 sind insbesondere gehärtete Scheiben, um das verschleißarme Abrollen der Laufelemente (hier die Nadeln des Nadellagers) zu gewährleisten.

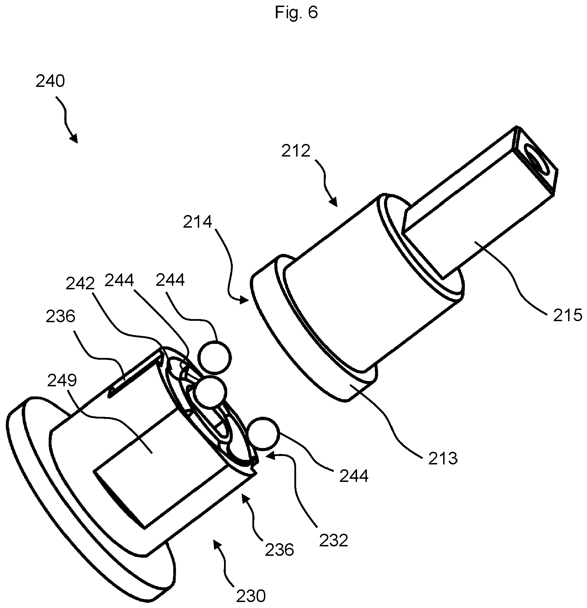

Das obere Außenblech 253 weist zwei Vorsprünge 255 auf, die jeweils in eine Nut der Verschiebungshülse 230 (vgl. Fig. 6) einführbar sind und verhindern, dass beim Aufschrauben Einstellmutter 251 das obere Außenblech 253 mitgedreht wird. Derart kann das Federelement 256 vor Beschädigung geschützt werden und vor allem das versehentliche Öffnen der Mutter vermieden werden. Unterhalb des oberen Außenbleches 253 befindet sich das Federelement 256, das in der Darstellung als Tellerfeder ausgebildet ist. Durch Einstellen des Abstands zwischen der Einstellmutter 251 und dem Bremsabschnitt 234 kann die Vorspannung des Federelements 256 eingestellt werden. Dadurch wiederum wird die Federwirkung der Federeinrichtung 250 eingestellt und somit der von der Hubmechanik 240 (vgl. Fig. 6) zu überwindende Bremswiderstand der Bremsfläche 226 und des Bremsabschnitts 234. Die Federwirkung kann ferner durch entsprechende Auslegung des Federelements 256 eingestellt werden bzw. durch Vorsehen mehrerer Federelemente 256 erhöht werden. Mittels des oberen Außenbleches 253 und des unteren Außenbleches 254 kann das Federelement 256 geschützt werden und mittels Einstellmutter 251 präzise die Vorspannung auf das Federelement 256 übertragen werden. Der Drehmechanismus 100 weist ferner ein Axiallager 261 auf. Mittels des Axiallagers 261 ist die Eingangswelle 212 drehbar gelagert. Im oberen Bereich ist ferner ein Teil des Gehäuses 110 dargestellt, das mit mehreren Befestigungsmittel 112 - hier ist nur eines exemplarisch gekennzeichnet - am restlichen Gehäuse 110 befestigt ist und die Federeinrichtung 250 einhaust.

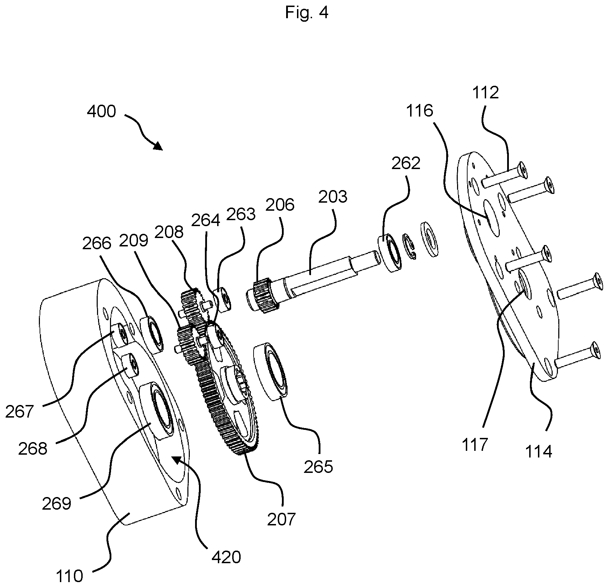

Fig. 4 zeigt die Drehrichtungsumkehreinrichtung 400 des in den Fig. 1a bis 2a dargestellten Drehmechanismus 100 in einer Explosionsansicht. Die Drehrichtungsumkehreinrichtung 400 fungiert als Getriebe des Drehmechanismus 100. Die Drehrichtungsumkehreinrichtung 400 ist in das Gehäuse 110 eingehaust, wobei in Fig. 4 ein Teil des Gehäuses 110 dargestellt ist, dass einen Ritzelaufnahmebereich 420 aufweist. Der Ritzelaufnahmebereich 420 ist nach oben hin offen und mit einem Deckel 114 abgedeckt. Der Deckel 114 ist dafür mittels mehrerer Befestigungsmittel 112 - hier ist nur eines exemplarisch gekennzeichnet - am entsprechenden Teil des Gehäuses 110 befestigt. Der Deckel 114 weist zwei Öffnungen 116, 117 auf. Durch die Öffnung 116 ist die Ausgangswelle 203 derart führbar, dass dieses im oberen Bereich mit der Verschiebungshülse 230 koppelbar ist (vgl. Fig. 2b) und sich dessen unterer Bereich, insbesondere das Zwischenritzel 206, innerhalb des Ritzelaufnahmebereichs 420 befindet. Innerhalb des Ritzelaufnahmebereichs 420 sind ferner zwei weitere Zwischenritzel 208, 209 angeordnet. Die Zwischenritzel 207, 208, 209 und das Übertragungselement 203 sind jeweils oben und unten durch jeweils ein Radiallager 262, 263, 264, 265, 266, 267, 268, 269 drehbar gelagert. Die Zwischenritzel 208, 209 sind derart angeordnet und ausgebildet, dass mittels diesen Drehmoment vom Zwischenritzel 206 zum Zwischenritzel 207 übertragbar ist. Es kann grundsätzlich auch nur eine Zwischenritzel 208, 209 vorgesehen sein, bei mehreren Zwischenritzeln 208, 209 können diese aber kleiner dimensioniert werden. Wenn zwei oder mehr Zwischenritzel 208, 209 verwendet werden, weisen diese insbesondere die gleichen Maße auf, um eine stabile Drehmomentübertragung zu gewährleisten.

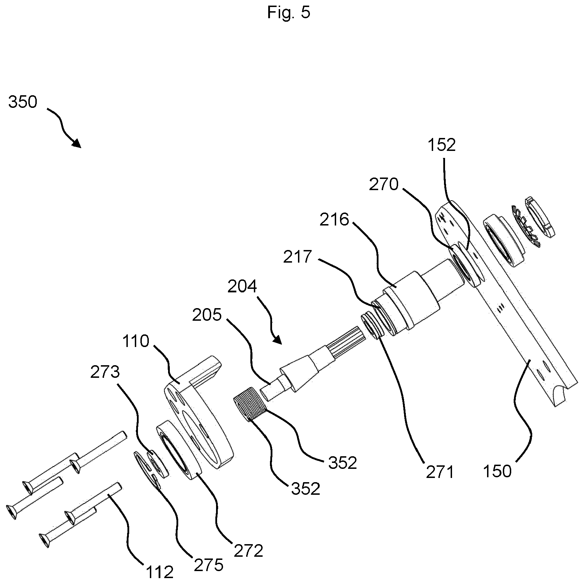

Fig. 5 zeigt einen Überlastmechanismus 350 des in den Fig. 1a bis 2a dargestellten Drehmechanismus 100 in einer Explosionsansicht. Die Adaptervorrichtung 150 weist eine Öffnung 152 auf, durch die die Ausgangswelle 216 führbar ist. Die Ausgangswelle 216 ist im oberen Bereich mittels eines Radiallagers 270, das in der Adaptervorrichtung 150 befestigt ist, drehbar gelagert. Im unteren Bereich der Ausgangswelle 216 ist diese mittels eines weiteren Radiallagers 272 drehbar gelagert. Das Radiallager 272 ist dabei in einem Teil des Gehäuses 110 befestigt. Im mittleren Bereich der Ausgangswelle 216 ist das Abtriebselement 140 befestigt (hier nicht dargestellt, vgl. Fig. 2a). Das Übertragungselement 204 ist mittels eines weiteren Axiallagers 271 drehbar gelagert. Im unteren Bereich des Übertragungselementes 204 weist dieses einen Aufnahmebereich 205, auf den Federn 352 - hier sind lediglich exemplarisch zwei Federn 352 gekennzeichnet - führbar bzw. aufsteckbar sind. Der hier dargestellte Teil des Gehäuses 110 ist mittels mehrerer Befestigungsmittel 112 - hier ist nur eines exemplarisch gekennzeichnet - am Rest des Gehäuses 110 befestigt (vgl. Fig. 2a). Die Federn werden unter dem Axiallager 271 auf den Aufnahmebereich 205 gesteckt und dann mit einer Mutter 273 mit Außengewinde in der Ausgangswelle 216 befestigt, die dementsprechend ein Innengewinde aufweist. Die Ausgangswelle 216 weist eine Nut 217 zur Aufnahme eines Spannrings 275 auf, mit dem die Ausgangswelle 216 über ein Radiallager 272 am Gehäuse befestigt ist.

Fig. 6 zeigt eine Hubmechanik 240 mit Eingangswelle 212 und Verschiebungshülse 230 des in den Fig. 1a bis 2a dargestellten Drehmechanismus 100 in einer Explosionsansicht. Die Eingangswelle 212 weist im oberen Bereich eine Koppelseite 215 auf, die mit der Handkurbel 120 koppelbar ist (vgl. Fig. 1a und 1b). Die Koppelseite 215 ist vorzugsweise derart ausgeformt, dass die Eingangswelle 212 und die Handkurbel 120 formschlüssig miteinander verbunden sind. Die Koppelseite 215 kann dafür einen rechteckigen, insbesondere wie in Fig. 6 dargestellt einen quadratischen, Querschnitt aufweisen. Alternativ sind weitere Querschnitte möglich, bspw. dreieckige, fünfeckige oder sechseckige Querschnitte sowie jeder weitere Querschnitt, mit dem eine formschlüssige Verbindung erreichbar ist. Die Handkurbel 120 kann auch auf andere Art und Weise mit der Eingangswelle 212 verbunden sein, bspw. mittels einer kraftschlüssigen Verbindung. Die Eingangswelle 212 weist im unteren Bereich eine Axialseite 214 auf, an der die Eingangswelle 212 ferner ein Endstück 213 aufweist. Die Verschiebungshülse 230 weist zwei Nuten 236 auf, die einander gegenüberliegend angeordnet sind. In diese Nuten 236 sind die beiden Vorsprünge 255 des oberen Außenblechs 253 einführbar (vgl. Fig. 3). Das Außenblech kann aber auch ohne Vorsprünge 255 und die verschiebehülse 230 ohne Nuten ausgeführt sein. In diesem Fall ist für die Vermeidung einer Verdrehung des oberen Außenblechs 253 die Innengeometrie des oberen Außenblechs 253 an die Flachseiten 249 der verschiebungshülse angepasst. Dies spart die zwei Nuten an der Verschiebehülse 230 ein und der Fertigungsaufwand für das Außenblech 256 ist ebenfalls geringer.

Die Verschiebungshülse 230 weist ferner im oberen Bereich eine Axialseite 232 auf. Auf der Axialseite 232 sind drei ansteigende Laufbahnen 242 angeordnet, wobei zur Wahrung der Übersichtlichkeit lediglich eine ansteigende Laufbahn 242 gekennzeichnet ist. Als einzelne ansteigende Laufbahn 242 wird dabei jeder Abschnitt der auf der Axialseite 232 vorgesehenen Vertiefung verstanden, der von einer tiefsten Lage zu einer höchsten Lage bzw. zu zwei höchsten Lagen reicht. Für jede Kugel 244 ist eine separate ansteigende Laufbahn 242 vorgesehen. Die drei ansteigenden Laufbahnen 242 sind hintereinander liegend und ineinander übergehend angeordnet. Die Hubmechanik 240 weist ferner drei Kugeln 244 auf, die jeweils in einer ansteigenden Laufbahn 242 gelagert sind. Das Endstück 213 weist ebenfalls eine bzw. drei Laufbahnen auf, die in Fig. 6 jedoch nicht sichtbar sind. Die Laufbahnen des Endstücks 213 können dabei eben bzw. flach ausgebildet sein, aber auch als ansteigende Laufbahn, analog zu den ansteigenden Laufbahnen 242 der Verschiebungshülse 230.

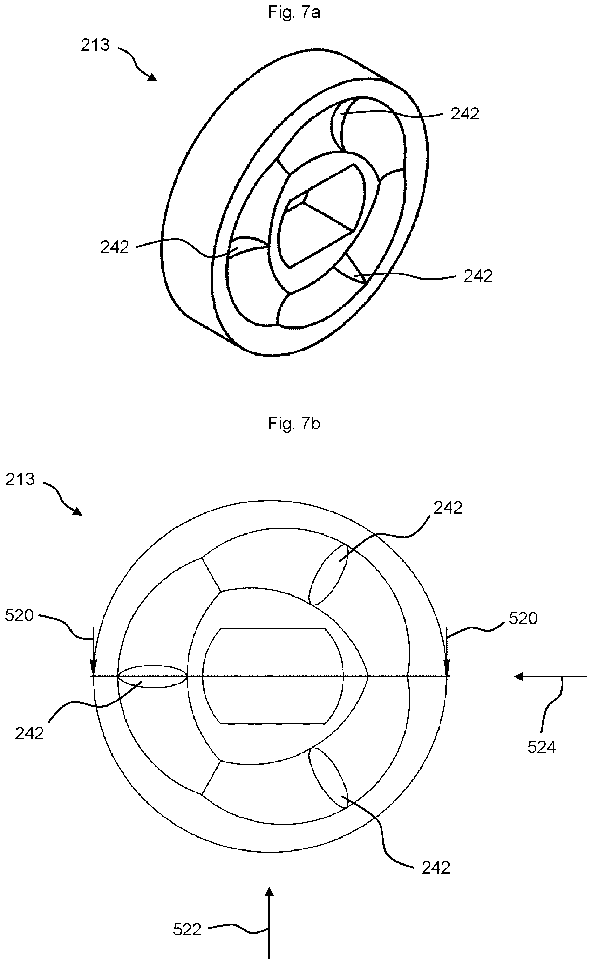

Fig. 7a zeigt ein mögliches Endstück 213 der in Fig. 6 dargestellten Eingangswelle 212 in einer isometrischen Ansicht. Das Endstück 213 entspricht dabei einer Ausführungsform, bei der auch die Eingangswelle 212 ansteigende Laufbahnen 242 (in Fig. 7a sind entsprechend drei ansteigende Laufbahnen 242 dargestellt) aufweist. Das im Folgenden bezüglich der Anordnung und Konfiguration der ansteigenden Laufbahnen 242 des Endstücks 213 Beschriebene gilt ebenso für die ansteigenden Laufbahnen 242 der Verschiebungshülse 230.

Fig. 7b zeigt das in Fig. 7a dargestellte Endstück 213 in einer Draufsicht. Die ansteigenden Laufbahnen 242 weisen mittig jeweils einen tiefen Bereich (auf diesen zeigt jeweils die entsprechende Bezugslinie) und jeweils an den Rändern jeweils einen hohen Bereich auf. Die ansteigenden Laufbahnen 242 sind derart hintereinander liegend angeordnet, dass der im Uhrzeigersinn weiter vorne liegende hohe Bereich einer ansteigenden Laufbahn 242 in den im Uhrzeigersinn weiter hinten liegenden hohen Bereich einer im Uhrzeigersinn folgenden ansteigenden Laufbahn 242 übergeht.

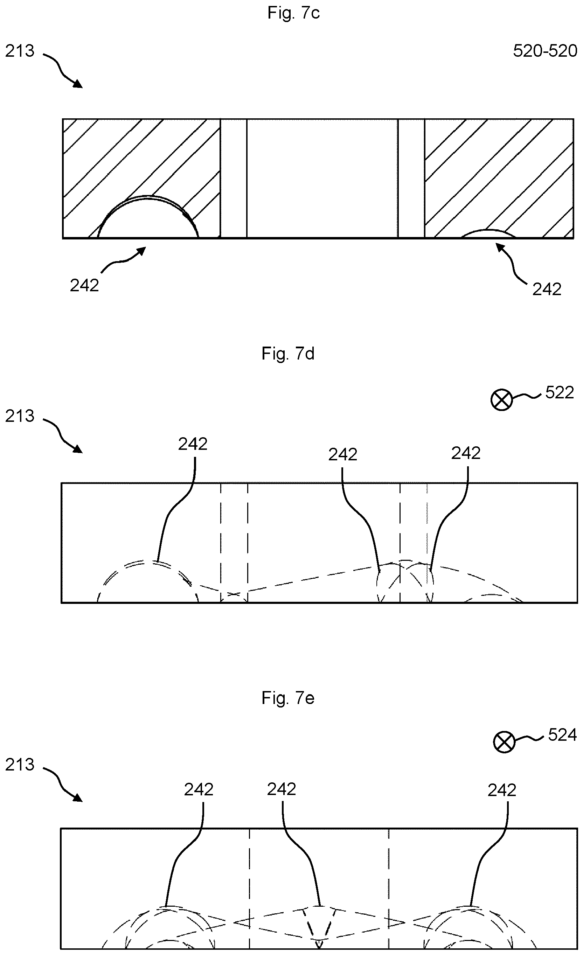

Fig. 7c zeigt das in den Fig. 7a und 7b dargestellte Endstück 213 in einer Schnittansicht 520-520. Die Schnittansicht 520-520 entspricht dabei der in Fig. 7b mittels der Bezugszeichen 520 dargestellten Schnittebene. Die Schnittebene verläuft auf der linken Seite durch einen tiefen Bereich einer ansteigenden Laufbahn 242 und auf der rechten Seite durch einen bzw. zwei hohe Bereiche einer bzw. zweier ansteigenden/r Laufbahn/en 242. Die in das Endstück 213 eingebrachte Vertiefung, d.h. die Geometrie der ansteigenden Laufbahnen 242 entspricht dabei im Wesentlichen einem Abschnitt eines Querschnitts einer Kugel 244 (vgl. Fig. 6). Dabei ist im dargestellten tiefen Bereich der ansteigenden Laufbahn 242 ein größerer Abschnitt bzw. Anteil des Querschnitts einer Kugel 244 als Vertiefung in das Endstück 213 eingebracht, als in dem/den dargestellten hohe/n Bereich/en.

Fig. 7d zeigt das in den Fig. 7a bis 7c dargestellte Endstück 213 in einer Seitenansicht. Die Seitenansicht folgt dabei einer Richtung 522, die ebenfalls in Fig. 7b gekennzeichnet ist (da von unten nach oben gerichtet). Fig. 7e zeigt das das in den Fig. 7a bis 7d dargestellte Endstück 213 in einer weiteren Seitenansicht. Hier folgt die Seitenansicht einer Richtung 524, die ebenfalls in Fig. 7b gekennzeichnet ist (da von rechts nach links gerichtet). Die ansteigenden Laufbahnen 242 sind mittels gestrichelter Linien dargestellt. Es ist erkennbar, dass die ansteigenden Laufbahnen 242 jeweils vom tiefen Bereich zu den hohen Bereichen kontinuierlich verlaufen. Insbesondere bei dem in Fig. 7e dargestellten mittigen tiefen Bereich ist erkennbar, dass bei diesem im tiefsten Punkt eine zusätzliche Vertiefung eingebracht ist. Damit kann erreicht werden, dass initial der Verdrehung der Eingangswelle 212 zur Verschiebungshülse 230 ein erhöhter Widerstand entgegenwirkt, wodurch einerseits dem Anwender bei Betätigung der Handkurbel 120 (vgl. Fig. 2a) eine entsprechende Rückmeldung gegeben werden kann und andererseits ein ungewolltes Beginnen der o.g. Verdrehung verhindert werden kann.

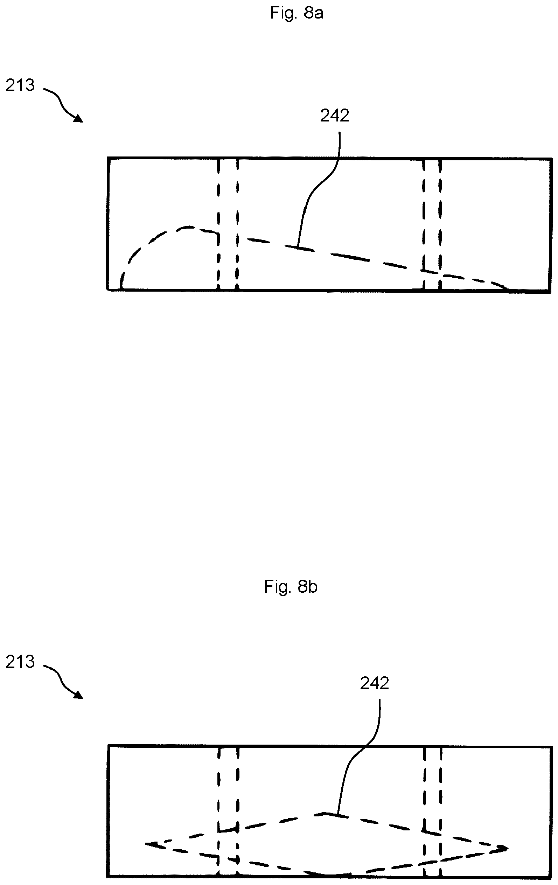

Fig. 8a zeigt ein alternatives Endstück 213 in einer Seitenansicht. Die in Fig. 8a dargestellte Seitenansicht folgt analog zu der in Fig. 7d dargestellten Seitenansicht der Richtung 522. Fig. 8b zeigt das in Fig. 8a dargestellte alternative Endstück 213 in einer weiteren Seitenansicht. Die in Fig. 8b dargestellte Seitenansicht folgt analog zu der in Fig. 7e dargestellten Seitenansicht der Richtung 524. Das in den Fig. 8a und 8b dargestellte alternative Endstück 213 weist im Vergleich zu dem in den Fig. 7a bis 7e dargestellten Endstück 213 lediglich eine einzelne ansteigende Laufbahn 242 auf.

Fig. 9 zeigt den in Fig. 1 dargestellten Freilaufmechanismus 300 mit dem Übertragungselement 204 in einer Explosionsansicht. Der Hebel 320 weist ferner einen Gewindeabschnitt 322 auf. Der Freilaufmechanismus 300 weist ferner eine Hebelaufnahme 324 auf, in die der Hebel 320 mittels dessen Gewindeabschnitts 322 einschraubbar ist. Der Freilaufmechanismus 300 weist ferner eine Axialwelle 330 auf, die jeweils berührend zwischen dem Hebel 320 und dem Übertragungselement 204 angeordnet ist und in der Hebelaufnahme 324 führbar ist. Wird der Hebel 320 in die Hebelaufnahme 324 eingeschraubt, wird die Axialwelle 330 weiter in die Hebelaufnahme 324 gedrückt, so dass das Übertragungselement 204 nach unten ausgelenkt wird. Das Übertragungselement 204 weist ferner eine Kontaktfläche 332 auf, die bei der in Fig. 9 dargestellten Ausführungsform kegelförmig ausgebildet ist.

Fig. 10 zeigt einen Teil des in Fig. 5 dargestellten Überlastmechanismus 350 in Kombination mit dem Abtriebselement 140 in einer Explosionsansicht. Die Ausgangswelle 216 weist eine Innenkontur auf, die derart komplementär zu der Kontaktfläche 332 ausgebildet ist, dass zwischen der Ausgangswelle 216 und dem Übertragungselement 204 - sofern diese sich berühren - eine reibschlüssige Verbindung ausprägbar ist. Anders formuliert und entgegen der in den Fig. gewählten Darstellung, bildet sich durch die reibschlüssige Verbindung eine entsprechende Kontaktfläche 332 zwischen der Ausgangswelle 216 und dem Übertragungselement 204 aus. Unterhalb des Übertragungselementes 204 sind wie schon oben beschrieben ein Axiallager 271, eine Mutter 273 und eine Vielzahl von Federn 352 angeordnet. Die Federanordnung aus den Federn 352 weist insbesondere Federn mit wechselnder Ausrichtung auf (siehe Figur 2a), in der jeweils eine bestimmte Anzahl an Federn (bspw. 2, 3 oder 4 Federn) erst nach unten und dann nach oben ausgerichtet sind (oder umgekehrt). Mit der Mutter 273, die sich an dem Übertragungselement 216 anstützt, kann die Federanordnung dann gegen den Hebel 320 vorgespannt werden.

In der Darstellung sind zur Wahrung der Übersichtlichkeit lediglich zwei der ca. zehn Federn 352 gekennzeichnet. Die Federn 352 sind als Tellerfedern ausgebildet. Das Übertragungselement 204 ist ferner derart ausgebildet, dass es im unteren Bereich in die übereinanderliegenden Federn 352 führbar ist, wobei oberhalb der Federn 352 das Axiallager 271 angeordnet ist. Die Federn 352 sind derart angeordnet und ausgebildet, dass mittels diesen das Übertragungselement 204 gegen bzw. in die Ausgangswelle 216 gedrückt wird. Derart kann die reibschlüssige Verbindung zwischen dem Übertragungselement 204 und der Ausgangswelle 216 gewährleistet werden. Wird nun eine Last in den Drehmechanismus 100 eingeleitet, bspw. über einen auf der Adaptervorrichtung 150 befestigten Funktionsaufbau, das größer als das entsprechende Reibmoment der reibschlüssigen Verbindung zwischen Ausgangswelle 216 und dem Übertragungselement 204 ist, wird die reibschlüssige Verbindung gelöst und die Ausgangswelle 216 und das Übertragungselement 204 können zumindest kurzzeitig frei gegeneinander verdreht werden. Dadurch wird es ermöglicht, dass der Drehmechanismus 100 die eingeleitete, zu hohe Last ableitet bzw. abbaut, ohne dass Funktionselemente des Drehmechanismus 100 beschädigt werden. Je größer die mittels der Federn 352 eingestellte Federkraft ist, desto stärker ist auch die reibschlüssige Verbindung zwischen der Ausgangswelle 216 und dem Übertragungselement 204, so dass in gleichem Maße die reibschlüssige Verbindung erst bei einer entsprechend höheren, in den Drehmechanismus 100 eingeleiteten Last freigeben wird. Hierbei kann die Federkraft mittels der Federn 352 derart eingestellt werden, dass zum einen die Funktionselemente des Drehmechanismus 100 geringstmöglich geschädigt werden und zum anderen die reibschlüssige Verbindung für den Normalbetrieb zuverlässig gewährleistet werden kann.

Wird nun mittels Einschrauben des Hebels 320 die Axialwelle 330 weiter in die Hebelaufnahme 324 eingeführt und dadurch das Übertragungselement 204 nach unten ausgelenkt (vgl. Fig. 9), werden auch das Radiallager 273 nach unten ausgelenkt und die Federn 352 weiter gespannt. Dadurch kann die reibschlüssige Verbindung zwischen der Ausgangswelle 216 und dem Übertragungselement 204 unterbrochen werden, so dass mittels der Handkurbel 120 (vgl. Fig. 1a und 1b) kein Drehmoment mehr zum Abtriebselement 140 übertragbar ist, d.h. die Übertragungseinrichtung 200 freidreht. Wird der Hebel 320 dann wieder aus der Hebelaufnahme 324 ausgeschraubt, drücken die Federn 352 das Übertragungselement 204 wieder gegen bzw. in die Ausgangswelle 216, so dass wieder Drehmoment von der Handkurbel 120 (vgl. Fig. 1a und 1b) zum Abtriebselement 140 übertragbar ist.

Fig. 11a zeigt die Bremsmechanik 220 mit einer Verschiebungshülse 230 in einer Explosionsansicht. Fig. 11b zeigt die in Fig. 11a dargestellte Bremsmechanik 220 in einer Bremsposition 228 mit einer Federeinrichtung 250 in einer Schnittansicht 530-530 und Fig. 11c zeigt die in den Fig. 11a und 11b dargestellte Bremsmechanik 220 in einer Freilaufposition 229 in einer Schnittansicht. Die in den Fig. 11b und 11c jeweils gezeigte Schnittansicht 530-530 entspricht der in Fig. 11a mittels der Bezugszeichen 530 gekennzeichneten Schnittebene. In der Bremsposition 228 (vgl. Fig. 2a) liegt der Bremsabschnitt 234 an der Bremsfläche 226 an bzw. wird mittels der Federeinrichtung 250 an diese gepresst. Derart wird eine Drehmomentübertragung mittels der Übertragungseinrichtung 200 (vgl. Fig. 2b) unterbunden. In der Freilaufposition 229 ist der Bremsabschnitt 234 von der Bremsfläche 226 beabstandet. Derart wird eine Drehmomentübertragung mittels der Übertragungseinrichtung 200 (vgl. Fig. 2b) ermöglicht.

Der Drehmechanismus 100 wird dann folgendermaßen betätigt, wenn der Funktionsaufbau auf einem Fahrzeug gedreht werden soll: Über den Hebel 120 wird ein Drehmoment auf die Eingangswelle 212 eingebracht. Die Kugeln 244 nehmen diese Drehbewegung auf und laufen dadurch in der ansteigenden Laufbahn 242, wodurch sich die Verschiebungshülse 230 axial von der Eingangswelle 212 wegbewegt, bis sie an den Anschlag 235 bzw. an den Einstellring 233 anschlägt. Dadurch gibt es keine Ausweichmöglichkeit der Verschiebungshülse 230 mehr, die Kugeln können nicht weiter in der ansteigenden Laufbahn abrollen und übertragen nun das Drehmoment an die Verschiebungshülse 230. Durch die komplementäre Innengeometrie der Verschiebungshülse 230 und Außengeometrie der Ausgangswelle 203 (hier abgeflachte Seiten, aber auch sternförmige, mehrkantige oder auch ovale Geometrien sind denkbar) wird das Drehmoment dann über das Ritzel 206 auf die Zwischenritzel 208, 209 und schließlich auf das Ritzel 207 übertragen, dann weiter auf das Übertragungselement 204, über die Kontaktfläche 332 auf die Ausgangswelle 216 und schließlich auf das Abtriebselement 140.

### Bezugszeichenliste

- 100: Drehmechanismus
- 110: Gehäuse
- 112: Befestigungsmittel
- 114: Deckel
- 116: Öffnung
- 117: Öffnung
- 120: Handkurbel
- 140: Abtriebselement
- 150: Adaptervorrichtung
- 152: Öffnung
- 200: Übertragungseinrichtung
- 203: Ausgangswelle
- 204: Übertragungselement
- 205: Aufnahmebereich
- 206: Zwischenritzel
- 207: Zwischenritzel
- 208: Zwischenritzel
- 209: Zwischenritzel
- 212: Eingangswelle
- 213: Endstück
- 214: Axialseite
- 215: Koppelseite
- 216: Ausgangswelle
- 217: Nut
- 218: Radiallager
- 220: Bremsmechanik
- 224: Bremsgehäuse
- 226: Bremsfläche
- 228: Bremsposition
- 229: Freilaufposition
- 230: Verschiebungshülse
- 232: Axialseite
- 233: Einstellring
- 234: Bremsabschnitt
- 235: Anschlag
- 236: Nut
- 240: Hubmechanik
- 242: Ansteigende Laufbahn
- 244: Kugel
- 249: Flachseite
- 250: Federeinrichtung
- 251: Oberer Einstellring
- 252: Unterer Einstellring
- 253: Oberes Außenblech
- 254: Untere Laufscheibe
- 255: Vorsprung
- 256: Federelement
- 258: obere Laufscheibe
- 259: Axiallager
- 261: Axiallager
- 262: Radiallager
- 263: Radiallager
- 264: Radiallager
- 265: Radiallager
- 266: Radiallager
- 267: Radiallager
- 268: Radiallager
- 269: Radiallager
- 270: Radiallager
- 271: Axiallager
- 272: Radiallager
- 273: Mutter mit Außengewinde
- 275: Spannring
- 300: Freilaufmechanismus
- 320: Hebel
- 322: Gewindeabschnitt
- 324: Hebelaufnahme
- 330: Axialwelle
- 332: Kontaktfläche
- 350: Überlastmechanismus
- 352: Feder
- 400: Drehrichtungsumkehreinrichtung
- 420: Ritzelaufnahmebereich
- 520-520: Schnittansicht
- 522: Richtung
- 524: Richtung
- 530-530: Schnittansicht

## Patentansprüche

1. Drehmechanismus (100) mit Bremsfunktion, umfassend
einen Antrieb, insbesondere eine Handkurbel (120), zum Einleiten eines Drehmoments in den Drehmechanismus (100);
ein Abtriebselement (140) zum Ausleiten des Drehmoments aus dem Drehmechanismus (100); und
eine Übertragungseinrichtung (200) mit mehreren Übertragungselementen (203, 204), insbesondere einer Wellenanordnung, die das Drehmoment vom Antrieb zum Abtriebselement (140) übertragen,
**dadurch gekennzeichnet, dass**
die Übertragungseinrichtung (200) ferner eine Bremsmechanik (220) aufweist, die in einer Bremsposition (228) die Übertragungseinrichtung (200) fixiert und die in einer Freilaufposition (229) die Übertragungseinrichtung (200) freigibt.

2. Drehmechanismus (100) nach Anspruch 1, bei der die Übertragungseinrichtung (200) eine Eingangswelle (212) und eine Ausgangswelle (216) aufweist und die Bremsmechanik (220) zum Fixieren der Übertragungseinrichtung (200) mit einer Bremsfläche (226) eine Druckkraft gegen die Eingangswelle (212) und/oder die Ausgangswelle (216) ausübt.

3. Drehmechanismus (100) nach Anspruch 2, bei der die Bremsmechanik (220) durch eine Federeinrichtung (250) vorgespannt ist, so dass die Druckkraft erzeugt wird.

4. Drehmechanismus (100) einem oder mehreren der vorhergehenden Ansprüche, bei der die Übertragungseinrichtung (200)zumindest zwei miteinander koaxial und mit einer Axialseite gegenüberliegend angeordnete Übertragungselemente aufweist, wobei die Übertragungselemente an ihren zueinander gewandten Axialseiten (214, 232) über eine Hubmechanik (240) in Kontakt stehen.

5. Drehmechanismus (100) nach Anspruch 4, bei der die Hubmechanik (240) zumindest eine in zwei entgegengesetzte Richtungen ansteigende Laufbahn (242) auf einer Axialseite (214, 232) der Übertragungselemente (230, 212) umfasst und die zueinander gewandten Axialseiten (214, 232) über zumindest eine Kugel (244) in Kontakt stehen, die in der ansteigenden Laufbahn (242) geführt ist.

6. Drehmechanismus (100) nach Anspruch 5, bei der auf der Axialseite (214, 232) drei der ansteigenden Laufbahnen (242) vorgesehen sind und in jeder eine Kugel (244) angeordnet ist, die in der ansteigenden Laufbahn (242) abrollt.

7. Drehmechanismus (100) nach einem oder mehreren der vorhergehenden Ansprüche, ferner umfassend, eine Drehrichtungsumkehreinrichtung (400), insbesondere zumindest ein an dem Abtriebselement (140) ausgebildetes Zwischenritzel (206, 207, 208, 209).

8. Drehmechanismus (100) nach einem oder mehreren der vorhergehenden Ansprüche, ferner umfassend einen Freilaufmechanismus (300), der einen Hebel (320) zur Verschiebung, insbesondere zur axialen Verschiebung, von zumindest einem Übertragungselement (203, 204) aufweist, so dass die Drehmomentübertragung des Drehmechanismus (100) unterbrochen ist.

9. Drehmechanismus (100) nach Anspruch 8, bei der der Freilaufmechanismus (300) eine Axialwelle (330) aufweist, die axial verschiebbar ist, so dass die Übertragung des Drehmoments vom Antrieb zum Abtriebselement (140) in der Übertragungseinrichtung (200) unterbrochen ist.

10. Drehmechanismus (100) nach Anspruch 8 oder 9, bei der der Hebel (320) eine Axialverschiebung bewirkt, wobei der Hebel (320) als Drehhebel ausgebildet ist, wobei der Hebel (320) einen Gewindeabschnitt (322) aufweist, der am unteren Ende mit dem zu verschiebenden Übertragungselement (203, 204) in Kontakt steht.

11. Drehmechanismus (100) nach einem der Ansprüche 8 bis 10, bei dem das zu verschiebende Übertragungselement (203, 204) entgegen der Verschiebungsrichtung mittels einer Spanneinrichtung vorgespannt ist, insbesondere mittels Federn (352).

12. Drehmechanismus (100) nach einem oder mehreren der vorhergehenden Ansprüche, ferner umfassend einen Überlastmechanismus (350), der zumindest eine Axialwelle und ein Übertragungselement (203, 204) aufweist, wobei die Axialwelle und das Übertragungselement (203, 204) mit einer reibschlüssigen, insbesondere kegelförmigen Kontaktfläche (332) ausgebildet sind.

13. Drehmechanismus (100) nach Anspruch 12 in Kombination mit einem der Ansprüche 8 bis 11, bei dem die Axialwelle mit der reibschlüssigen Kontaktfläche (332) des Überlastmechanismus (350) auch das axial verschiebbare Übertragungselement (203, 204) des Freilaufmechanismus (300) ausbildet.
